# EUROPEAN PATENT APPLICATION

(11) **EP 4 707 252 A1**
(43) Date of publication of application: **11.03.2026**
(21) Application number: 25199979.3
(22) Date of filing: 03.09.2025
(51) Int. Cl.: C02F 3/32, C02F 11/02, C02F 11/12, C05F 7/00, C05F 9/04, C05F 17/40, A01G 24/20, A01G 24/27, C02F 11/00, B01D 1/00

(54) **METHOD FOR CONVERTING CONTAMINATED SLUDGE INTO BIOMASS**

(30) Priority: 04.09.2024 NL 2038577
(71) Applicant: Natural Soil Improvement BV, 6815 HL Arnhem (NL)
(72) Inventor: BADE, Tom, 6815HL Arnhem (NL)
(74) Representative: Verhees, Godefridus Josephus Maria

(57) **Abstract**

In a method for converting contaminated sludge, particularly sludge from a sewage treatment plant, into biomass, the contaminated sludge to be processed is mixed with paper pulp and placed in pots 7, after which Miscanthus plants 9 are grown in the pots. During the growing season of the Miscanthus plants, the substrate 5 in the pots is watered. As the plant grows, harmful substances are broken down and absorbed by the plant. After one growing season, the Miscanthus plants are harvested, and the roots (11) containing remnants of the substrate (5) are removed from the stems of the Miscanthus plants (9). The roots (11) containing remnants of the substrate (5) are then processed into a new substrate. This new substrate is then placed in additional pots, and trees are grown in these pots. The harmful material remaining in the substrate is absorbed by the trees and converted into biomass.

## Description

### Technical field of the invention

The invention relates to a method for converting contaminated sludge, in particular sludge from a sewage treatment plant, into biomass, comprising:
- growing one or more plants in the sludge,
- removing the stems and leaves from the roots of the plants, and
- using the sludge remains as a growth substrate.

### Background of the invention

A method according to the preamble of claim 1 is known from CN112174461A. In this known method, the sludge is spread, after which fast-growing plants are grown in the contaminated sludge, and earthworms are added to the sludge. The plants above the sludge are then cut off, and the earthworms and roots are separated from the sludge. The processed sludge can then serve as a growth substrate, and the roots can be disposed of. This known method is inadequate for converting heavily contaminated sludge. In the case of heavily contaminated sludge, harmful substances will remain in the sludge after applying this known method. The sludge is then unsuitable for use as a growth substrate and must be disposed of as contaminated sludge.

### Summary of the invention

An object of the invention is to provide an improved method for converting contaminated sludge into biomass, whereby the sludge is completely converted into biomass so that no contaminated sludge remains that would require disposal. To this end, the method according to the invention is characterized in that:
before plants are grown in the sludge:
   - the contaminated sludge is dried to a moisture content of no more than 20% by weight, after which
   - the dried sludge is shredded into pieces with a maximum size of 1 cm, then
   - the shredded sludge is mixed with paper pulp with a moisture content between 20 and 40% by weight in a ratio of 40-60% by weight sludge and 60-40% by weight paper pulp, and then
   - the mixture of paper pulp and sludge is shredded into pieces with a maximum size of 1 cm, after which
   - the substrate formed by the shredded mixture of paper pulp and sludge is placed in a container, and
   - one or more Miscanthus plants are grown in the substrate present in the container, with one rhizome of a Miscanthus plant being added to every 0.5 to 1 liter of substrate. added,
and when growing plants in the sludge:
   - 0.2 to 2 grams of mycorrhizae are added to the substrate for each rhizome of the Miscanthus plant, along with other microorganisms that support the Miscanthus plant in breaking down harmful substances into nutrients it needs, and
   - during the Miscanthus plant's growing season, the substrate in the container is watered, with no nutrients added to the substrate, and
   - the Miscanthus plants are harvested after one growing season, and
   - the stems and leaves of the Miscanthus plants are removed, after which
   - the roots and remains of the substrate are composted into a new substrate, and
   - the new substrate is moved to a separate container, and any remaining harmful substances in the new substrate are broken down by growing trees in the new substrate without adding any nutrients to the new substrate.

All of the steps described above are necessary to completely convert heavily contaminated sludge into biomass. When growing Miscanthus in the substrate, no nutrients are added. As a result, the plant will find insufficient nutrients in the substrate. This forces the plant to extract these nutrients from complex molecular structures (the contaminants) over the course of the growing season, using mycorrhizae, among other things. Mycorrhizae do this using amino acids.

The other microorganisms mentioned that are added include one or more of the following: Bacillus licheniformis, Bacillus megaterium, Bacillus polymyxa, Bacillus pumilus, Bacillus subtilis, Paenibacillus azotophyllus, Entrosphospora colombiana, Funneliformis mosseae, Glomus clarum, Glomus deserticola, Glomus etunicatum, Glomus sp., Rhizophagus intraradices, Rhizophagus irregularis, and Pisolithus tinctorius.

Sludge from a wastewater treatment plant (WWTP) is very corrosive. Plants struggle to grow on this sludge, and it also contains polymers that repel water. This makes it very difficult to grow plants, because once it dries, it becomes hard. Therefore, paper pulp is added to this sludge. The function of paper pulp is to not only give and maintain an open structure to the mixture of paper pulp and sludge, but also to retain water. The latter is necessary for good plant growth and, therefore, to fulfill the plant's (purifying) function.

The substrate formed by a mixture of paper pulp and sludge forms the basis for healthy refining by the plant. The paper pulp is essential for proper refining (the complete breakdown of harmful substances by the plant), because without proper water management, this process stalls. The specially created substrate was completely converted into biomass after cultivating the Miscanthus in the first round and the tree in the second round. The method is therefore not aimed at extracting pollutants from sludge, but at fully converting the sludge into biomass and thus fully converting all harmful substances into nutrients usable by the plant. It is important that no nutrients are added so that the plants and trees can survive solely by breaking down and absorbing pollutants.

The presence of paper pulp is essential in this regard. Without paper pulp, the plant cannot grow in the sludge. By carrying out the conversion process in two steps, the first with a Miscanthus plant and the second with a tree, all the contaminated sludge is converted into biomass. The decomposing action of a tree's roots is essential in this process. Mycorrhizae form during this process, which efficiently break down harmful substances. To accelerate the conversion process, additional mycorrhizae are added to the substrate.

The method according to the invention is more than just soil purification. In the method according to the invention, the substrate is completely eliminated and converted into biomass, thereby fully breaking down harmful substances. This also makes the method distinctly different from phytoremediation, because cultivation takes place in a pot, so the focus is not on breaking down contamination, but on completely eliminating the substrate and converting it into biomass. Plants are not grown under a regime of scarcity. Throughout the cultivation process, the aim is to provide the plant with as many minerals as possible. If sewage sludge, which remains after wastewater treatment, is used as the substrate, it is best to mix the sewage sludge with paper pulp before placing it in pots to retain water for the Miscanthus plant to grow.

A plant pot can be used as a container. In that case, the substrate formed by the shredded mixture of paper pulp and sludge is preferably placed in pots with a capacity of 0.5 to 1 liter, with one Miscanthus plant grown in each pot. However, instead of pots, the substrate can also be placed in a larger container, such as a basin, in which a large number of Miscanthus plants can be grown.

Liquidambar, Catalpa, and/or Oak are preferred trees because these are fast-growing trees and therefore require a lot of nutrients, thereby initiating the conversion of harmful substances into beneficial nutrients.

Ideally, watering should be done using an ebb-and-flow system, with the pots placed on a waterproof surface.

### Brief description of the drawings

The invention will be explained in more detail below using an exemplary embodiment of the method according to the invention shown in the drawings. The following are shown schematically:
Figure 1: Drying the sludge to be processed;
Figure 2: Shredding the dried sludge;
Figure 3: Mixing the shredded sludge with paper pulp;
Figure 4: Shredding the mixture of sludge and paper pulp;
Figure 5: Potting the mixture of sludge and paper pulp;
Figure 6: Growing Miscanthus in a pot;
Figure 7: Watering the Miscanthus present in the pot;
Figure 8: Harvesting the Miscanthus;
Figure 9: Composting the Miscanthus roots and remaining substrate; and
Figure 10: Potting the composted substrate into a pot and growing a tree in the substrate.

### Detailed description of the drawings

From a cultivation perspective, it's an undesirable situation when a plant has been in a pot for too long. In that case, all the soil has disappeared and been converted into plant and roots. This is due to scarcity. After all, unlike in the wild, the plant doesn't have the ability to expand its root system indefinitely. This scarcity even leads to the plant's roots taking on the shape of the pot.

The method according to the invention focuses on consciously creating this scarcity. The plant is forced to convert all available substrate into biomass. This takes place within a single growing season.

Furthermore, the ability of plants to generate biomass through mycorrhiza and other micro-organisms is utilized.

Organisms break down harmful substances. Mycorrhizae are fungi that have a symbiotic relationship with plants. The fungi receive sugars from the plantwhich they cannot produce themselves-and in return, the fungi provide the plant with essential nutrients (nitrogen, phosphorus, potassium, iron, magnesium, etc.). When these nutrients are scarce, these fungi are able to break down complex molecular structures using amino acids, thus extracting useful (trace) elements.

The desired scarcity can be created in a pot, forcing the plant, if it wants to grow, to convert these polluting elements into useful plant substances with the help of the mycorrhizae and other microorganisms. This mechanism is particularly suitable for converting sludge left behind in a sewage treatment plant into biomass. This material is released during the treatment of wastewater from sewers and contains countless harmful substances (asbestos, PCBs, medications, hormones, etc.).

The other microorganisms added include one or more of the following:

### Bacteria:

- Bacillus licheniformis
- Bacillus megaterium
- Bacillus polymyxa
- Bacillus pumilus
- Bacillus subtilis
- Paenibacillus azotophyllus

### Endomycorrhiza:

- Entrosphospora colombiana
- Funneliformis mosseae
- Glomus clarum
- Glomus deserticola
- Glomus etunicatum
- Glomus sp.
- Rhizophagus intraradices
- Rhizophagus irregularis

### Ectomycorrhiza:

- Pisolithus tinctorius

It is important to use a fast-growing plant that produces a lot of biomass quickly and thus exerts pressure on the substrate. Tests have shown that Miscanthus has the best properties for this, for the following reasons:
- The plant grows aggressively upwards, has a strong stem, and does not break.
- The biomass can be used in numerous ways (lignin extraction, but also as roofing material).
- The plant grows from rhizomes, which already have their own bacterial and fungal fauna around them. This not only provides them with good protection against the aggressive sludge, but also allows them to get to work immediately (a rootstock or rhizome is the offshoot of a plant that continues to grow underground and from which a new plant emerges).
- The plant has no legal complications.

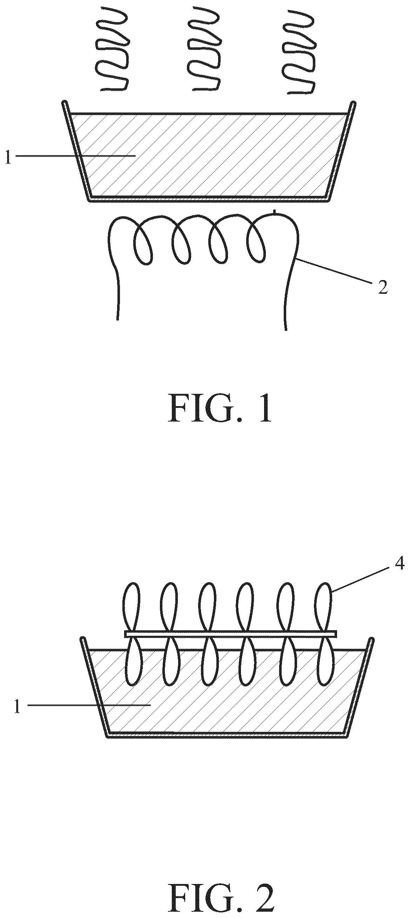

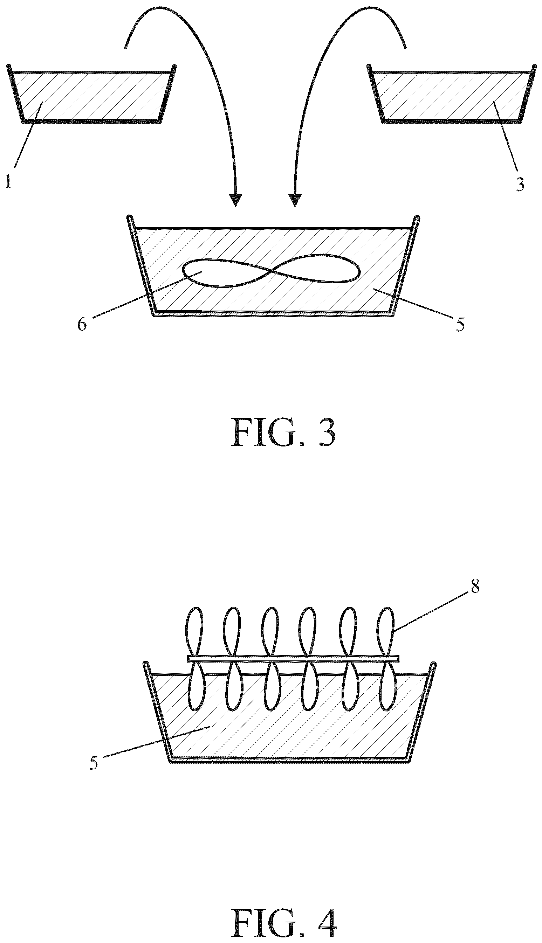

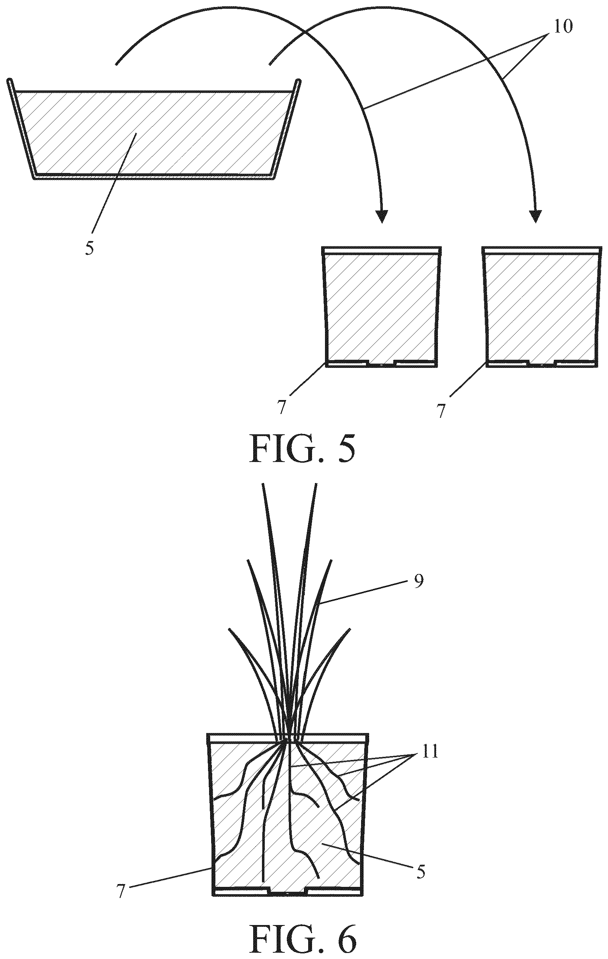

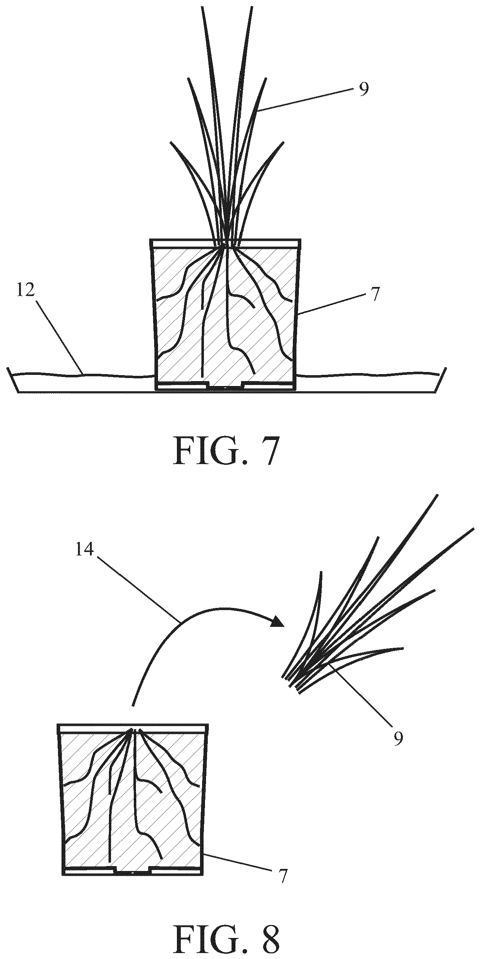

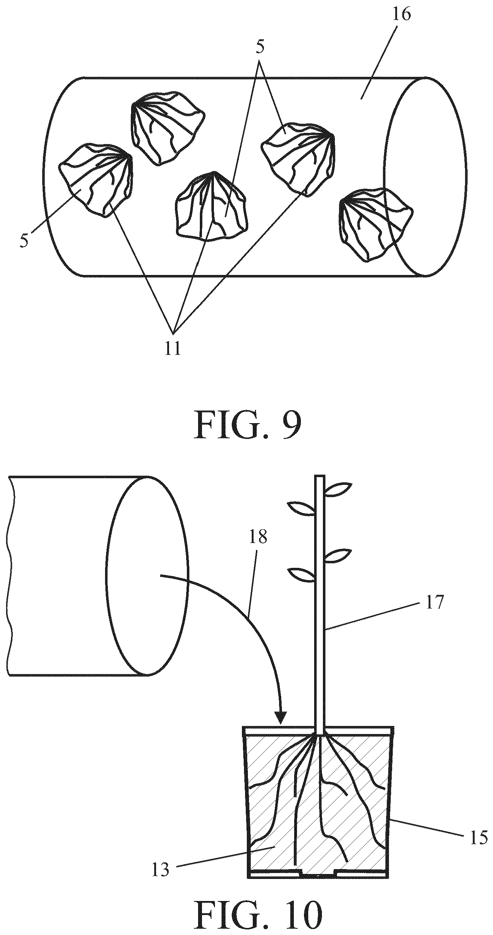

The process for converting contaminated sludge from a wastewater treatment plant into biomass involves the following steps:
- drying 2 of the contaminated sludge 1 to a moisture content of no more than 20% by weight, see Figure 1,
- shredding 4 of the dried sludge 1 into pieces with a maximum dimension of 1 cm, see Figure 2,
- mixing 6 of the shredded sludge 1 with paper pulp 3 with a moisture content between 20 and 40% by weight, in a ratio of 40-60% by weight sludge and 60-40% by weight paper pulp, see Figure 3,
- shredding 8 of the mixture 5 of paper pulp 3 and sludge 1 into pieces with a maximum dimension of 1 cm, see Figure 4,
- placing 10 of the shredded mixture of paper pulp 3 and Sludge 1 formed from the substrate 5, see Figure 5,
- Growing Miscanthus plants 9 in the substrate 5 present in the pots 7, adding one rhizome of a Miscanthus plant to every 0.5 to 1 liter of substrate, see Figure 6,
- Adding 0.2 to 2 grams of mycorrhiza and other microorganisms that support the Miscanthus plant 9 in breaking down harmful substances into nutrients it needs,
- Watering 12 of the substrate 5 in the pots 7 during the growing season of the Miscanthus plant 9, see Figure 7,
- Harvesting 14 of the Miscanthus plants 9 after one growing season, see Figure 8,
- Removing the roots 11 with remnants of the substrate 5 in between from the stem of the Miscanthus plants,
- Composting 16 of the roots 11 with remnants of the substrate 5 in between to form a new substrate 13, see Figure 9, and
- Transfer 18 of the new substrate 13 to further pots 15 and grow 17 trees in the new substrate 13, see Figure 10.

When processing sludge left over from sewage treatment, the following has become clear from tests regarding the first round of refining:
1. The sludge left over from sewage treatment must be mixed with paper pulp. This is because the sludge is not only very aggressive to plants, but also because it is always treated with water-repellent substances, and the paper pulp is necessary to create an open structure and better retain water for the plant.
2. If a P9 pot is used for cultivation (a pot with a round cross-section and a diameter of 9 cm), the miscanthus grows up to 3 meters, completely eliminating the substrate.
3. All substances are broken down and absorbed by the plant. Heavy metals are not broken down but are found in the plant in homeopathically diluted quantities.
4. The plant material is therefore suitable for direct use (such as roofing) or as a base for extracting raw materials (lignin).

The Miscanthus is harvested after one growing season. The growing season lasted from February to October. Cultivation took place on a liquid-tight floor with an ebb and flow system, which supplies water based on capillary action. Irrigation was also used.

Tests have shown that this method eliminates 90% of the contaminants in the first round of refining and converts them into useful biomass. What remains after harvesting the Miscanthus are the plant roots, with some sludge residues in between. This material is then converted into a second substrate in a bioconverter.

This substrate still contains traces of contaminants, but these are removed in a second round of biomass cultivation. In this case, however, trees are used instead of Miscanthus. Tests have shown that the material is very well absorbed by trees and converted into biomass. For this second round, aggressively rooting tree species such as Liquidambar, Catalpa, and Oak are used.

Tests have shown that the trees also absorb the substrate well during their growth phase and develop a strong root ball, which can later be used without any problems for further cultivation in the soil.

Although the invention has been explained above using an embodiment, it should be noted that the invention is by no means limited to this embodiment. The invention also extends to all embodiments deviating from this embodiment within the scope defined by the claims.

## Claims

1. A method for converting contaminated sludge, in particular sludge from a wastewater treatment plant, into biomass, comprising:
- growing one or more plants (9) in the sludge (1),
- removing the stems and leaves from the roots of the plants (9), and
- using the remains of the sludge (5) as a growth substrate,
**characterized in that**:
before growing plants (9) in the sludge (1):
- the contaminated sludge (1) is dried (2) to a moisture content of a maximum of 20% by weight, after which
- the dried sludge (1) is shredded (4) into pieces with a maximum dimension of 1 cm, then
- the shredded sludge (1) is mixed (6) with paper pulp (3) with a moisture content between 20 and 40% by weight in a ratio 40-60% by weight sludge and 60-40% by weight paper pulp, and then
- the mixture (5) of paper pulp (3) and sludge (1) is shredded (8) into pieces with a maximum size of 1 cm, after which
- the substrate (5) formed by the shredded mixture of paper pulp (3) and sludge (1) is placed (10) in a container (7), and
- one or more Miscanthus plants (9) are grown in the substrate (5) present in the container (7), whereby one rhizome of a Miscanthus plant is added to every 0.5 to 1 liter of substrate,
and when growing plants (9) in the sludge (1):
- 0.2 to 2 grams of mycorrhizae for each rhizome of the Miscanthus plant, and other microorganisms that support the Miscanthus plant (9) in breaking down harmful substances into substances necessary for the plant nutrients are added to the substrate (5), and
- during the growing season of the Miscanthus plant (9), the substrate (5) in the container (7) is watered (12), with no nutrients being added to the substrate,
- the Miscanthus plants (9) are harvested after one growing season (14), and
- the stems and leaves of the Miscanthus plants are removed, after which
- the roots (11) and the remains of the substrate (5) are composted (16) into a new substrate (13), and
- the new substrate (13) is moved (18) to a further container (15) and any remaining harmful substances in the new substrate are broken down by growing trees (17) in the new substrate (13) and with no nutrients being added to the new substrate.

2. The method according to claim 1, wherein the container is a pot, **characterized in that** the substrate (5) formed by the shredded mixture of paper pulp and sludge is placed in pots (7) with a capacity of 0.5 to 1 liter, with one Miscanthus plant (9) being grown in each pot.

3. The method according to claim 1 or 2, **characterized in that** the said other microorganisms added contain one or more of the following microorganisms: Bacillus licheniformis, Bacillus megaterium, Bacillus polymyxa, Bacillus pumilus, Bacillus subtilis, Paenibacillus azotophyllus, Entrosphospora colombiana, Funneliformis mosseae, Glomus clarum, Glomus deserticola, Glomus etunicatum, Glomus sp., Rhizophagus intraradices, Rhizophagus irregularis, Pisolithus tinctorius.

4. The method according to claim 1, 2, or 3, **characterized in that** the trees (17) grown are Liquidambar, Catalpa, and/or Oak.

5. The method according to claim 1, 2, 3, or 4, **characterized in that** the watering (12) is carried out using an ebb-and-flow system, with the pots (7) placed on a liquid-tight surface.
